# EUROPÄISCHE PATENTSCHRIFT

(11) **EP 2 626 546 B1**
(45) Veröffentlichungstag und Bekanntmachung des Hinweises auf die Patenterteilung: **21.03.2018**
(21) Anmeldenummer: 13450005.7
(22) Anmeldetag: 29.01.2013
(51) Int. Cl.: F02M 55/00, F02M 47/02, F02M 61/16, F16L 15/00

(54) **Gewindeverbindung von Hochdruck-medium führenden Komponenten einer Einspritzvorrichtung für Brennkraftmaschinen**
Threaded connection of high pressure medium conducting components of an injection device for internal combustion engines
Liaison de filetage de composants guidant un milieu haute pression d'un dispositif d'injection pour moteurs à combustion

(30) Priorität: 07.02.2012 AT 1612012
(43) Veröffentlichungstag der Anmeldung: 14.08.2013
(73) Patentinhaber: Robert Bosch GmbH, 70469 Stuttgart (DE)
(72) Erfinder: Nussbaumer, Gernot, 4624 Pennewang (AT)

(56) Entgegenhaltungen:
- EP-A1- 1 860 363
- WO-A1-03/076794
- WO-A1-2009/033304
- US-A1- 2011 156 384

## Beschreibung

Die Erfindung betrifft eine Gewindeverbindung von Hochdruckmedium führenden Komponenten einer Einspritzvorrichtung für Brennkraftmaschinen, wobei eine erste Komponente an einem rohrförmigen Endabschnitt ein Innengewinde und eine zweite Komponente ein in das Innengewinde einschraubbares Außengewinde aufweist, wobei die zweite Komponente bei Festziehen der Gewindeverbindung mit einer Stirnfläche gegen eine Auflagefläche der ersten Komponente spannbar ist.

Die Erfindung betrifft weiters ein Verfahren zur Herstellung einer solchen Gewindeverbindung sowie eine erste Komponente für eine solche Gewindeverbindung.

Große Speichervolumen sind bei Common Rail Systemen für Großdieselmotoren aus hydraulischen Gründen notwendig. Daraus ergeben sich - auch aus Fertigungsgründen - große Dichtdurchmesser zum Abdichten der hochdruckbelasteten Bauteile. Hinsichtlich der Gewindebelastung sind diese großen Dichtdurchmesser bei Verschraubungen nachteilig. Einerseits müssen hohe Vorspannkräfte eingesetzt werden und andererseits ist die dynamische Belastung auf das Gewinde durch die pulsierende Innendruckbelastung erhöht.

Eine Entlastung des Gewindes kann derzeit praktikabel und effektiv nur über die Erhöhung des Gewindegrundradius - zur Reduzierung der Kerbwirkung - und durch eine Vergrößerung des Gewindedurchmessers - bei der die Kraftübertragungsfläche erhöht wird - erreicht werden. Weiters kann durch verbesserte Werkstoffqualität, Erhöhung der Gewindesteigung, insbesondere bei hoch vergüteten Schraubenverbindungen, Wärmebehandlungstechniken, Gewindefertigung (schlussvergütet - schlussgewalzt) und über den Schmierungszustand eine positive Beeinflussung der Belastbarkeit der Verschraubung erzielt werden. Geometrisch kann der Einsatz von Zugmuttern sowie von Gewinden mit Flankenwinkeldifferenzen und große Einschraubtiefen für die Dauerfestigkeit hilfreich sein.

Alle genannten, einsatzfähigen Maßnahmen sind jedoch in ihrer Wirkung beschränkt, insbesondere wenn hohe Vorspannkräfte benötigt werden.

Das Dokument WO 2009/033304 A1 offenbart eine Einspritzvorrichtung für Brennkraftmaschinen, umfassend ein Speichergehäuse und ein Druckrohr, welche miteinander verschraubt sind, wobei ein O-Ring zur Abdichtung des Injektors gegen den Zylinderkopf in einer Nut am rohrförmigen Endabschnitt des Speichergehäuses angeordnet ist.

Die Erfindung zielt daher darauf ab, die Dauerfestigkeit der Gewindeverbindung von Hochdruckmedium führenden Komponenten einer Einspritzvorrichtung für Brennkraftmaschinen auf einfache Weise zu verbessern.

Zur Lösung dieser Aufgabe sieht die Erfindung bei einem Verfahren der eingangs genannten Art vor, dass ein Außenring auf den rohrförmigen Endabschnitt gepresst wird, der eine elastische, in radialer Richtung wirkende Vorspannung aufbringt, und die Komponenten danach verschraubt werden,

Zur Lösung dieser Aufgabe sieht die Erfindung weiters bei einer Gewindeverbindung der eingangs genannten Art vor, dass die erste Komponente einen außen mittels Presssitz am rohrförmigen Endabschnitt befestigten Außenring trägt.

Mit der Erfindung wird die Gewindebelastung reduziert, indem eine gezielte Vorspannung des Innengewindes durch Verpressen eines mit Übermaß gestalteten Außenringes über die Außenfläche des rohrförmigen Endabschnittes aufgebracht wird. Um eine gezielte Einbringung von Eigenspannungen und eine gezielte Belastungsänderung zu erreichen, wird der Pressungsbereich bevorzugt auf das freie Ende des rohrförmigen Endabschnitts beschränkt. Dadurch wird der normalerweise hoch beanspruchte erste Gewindegang, d.h. der der Auflagefläche benachbarte Gewindegang, durch das darunterliegende, steifere und unter Vorspannung stehende Gewinde entlastet. Die Eigenspannungen wirken sich auch auf den ersten Gewindegang positiv aus.

Limitierend wirkt die Steifigkeit und Belastbarkeit des verpressten Außenringes und das mögliche Übermaß. Pressungen von mindestens 150 N/mm2, insbesondere von ca. 200 N/mm2 zeigen jedoch bereits sehr gute Wirkung und sind ohne weiteres auch erzielbar. Gleichzeitig ist darauf zu achten, dass der letzte Gewindegang nicht überlastet wird. Abhängig von diesen Faktoren ist eine Spannungsreduktion um 50 % abhängig von der Basisgeometrie möglich.

Alternativ zu einem Pressverband kann auch eine Spielpassung angebracht werden. Die Stützwirkung reduziert die Gewindespannungen im 1. Gewindegang.

Eine besonders vorteilhafte Anwendung der Erfindung betrifft eine Ausbildung, bei der die erste Komponente ein integrierter Hochdruckspeicher eines modularen Common Rail Injektors und die zweite Komponente ein Haltekörper des modularen Common Rail Injektors ist.

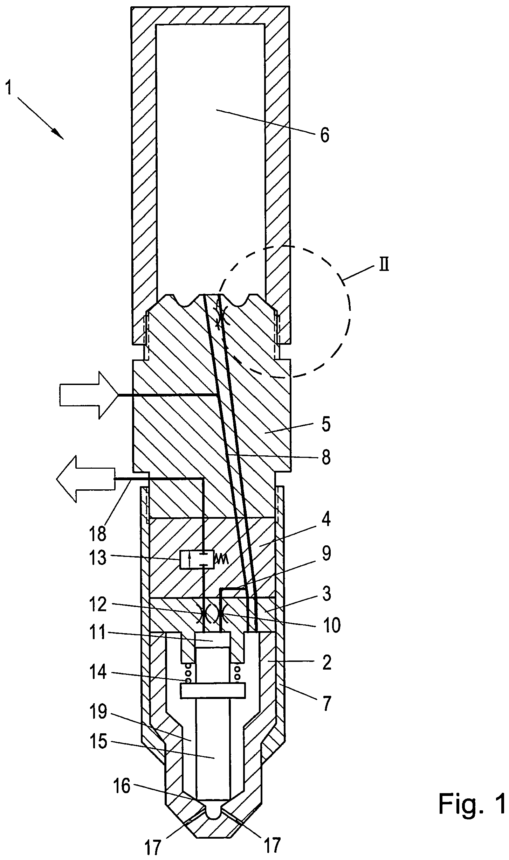

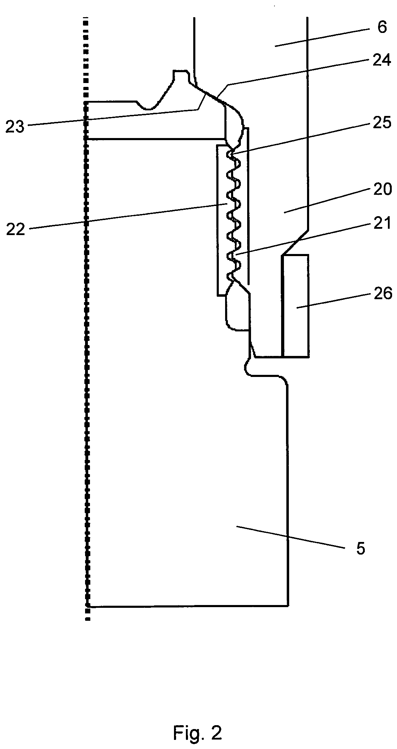

Die Erfindung wird nachfolgend anhand eines in der Zeichnung schematisch dargestellten Ausführungsbeispiels erläutert. In dieser zeigt Fig. 1 den grundsätzlichen Aufbau eines modularen Common Rail Injektors und Fig. 2 eine Detaildarstellung der Gewindeverbindung des Haltekörpers mit dem Hochdruckspeicher.

In Fig. 1 ist ein Injektor 1 dargestellt, der eine Einspritzdüse 2, eine Drosselplatte 3, eine Ventilplatte 4, einen Haltekörper 5 und einen Hochdruckspeicher 6 aufweist, wobei eine mit dem Haltekörper 5 verschraubte Düsenspannmutter 7 die Einspritzdüse 2, die Drosselplatte 3 und die Ventilplatte 4 zusammenhält. Im Ruhezustand ist das Magnetventil 13 geschlossen, sodass Hochdruckkraftstoff aus dem Hochdruckspeicher 6 über die Hochdruckleitung 8, die Querverbindung 9 und die Zulaufdrossel 10 in den Steuerraum 11 der Einspritzdüse 2 strömt, der Abfluss aus dem Steuerraum 11 über die Ablaufdrossel 12 aber am Ventilsitz des Magnetventils 13 blockiert ist. Der im Steuerraum 11 anliegende Systemdruck drückt gemeinsam mit der Kraft der Düsenfeder 14 die Düsennadel 15 in den Düsennadelsitz 16, sodass die Spritzlöcher 17 verschlossen sind. Wird das Magnetventil 13 betätigt, gibt es den Durchfluss über den Magnetventilsitz frei, und Kraftstoff strömt aus dem Steuerraum 11 durch die Ablaufdrossel 12, den Magnetventilankerraum und die Niederdruckbohrung 18 zurück in den nicht dargestellten Kraftstofftank. Es stellt sich ein durch die Strömungsquerschnitte von Zulaufdrossel 10 und Ablaufdrossel 12 definierter Gleichgewichtsdruck im Steuerraum 11 ein, der so gering ist, dass der im Düsenraum 19 anliegende Systemdruck die im Düsenkörper längs verschieblich geführte Düsennadel 15 zu öffnen vermag, sodass die Spritzlöcher 17 freigegeben werden und eine Einspritzung erfolgt.

Sobald das Magnetventil 13 geschlossen wird, wird der Ablaufweg des Kraftstoffes durch die Ablaufdrossel 12 gesperrt. Über die Zulaufdrossel 10 wird im Steuerraum 11 wieder Kraftstoffdruck aufgebaut und erzeugt eine zusätzliche Schließkraft, welche die hydraulische Kraft auf die Druckschulter der Düsennadel 15 vermindert und die Kraft der Düsenfeder 14 übersteigt. Die Düsennadel 15 verschließt den Weg zu den Einspritzöffnungen 17, wobei der Einspritzvorgang beendet wird.

Einspritzinjektoren dieser Art werden in modularen Common-Rail-Systemen verwendet, die dadurch gekennzeichnet sind, dass ein Teil des im System vorhandenen Speichervolumens im Injektor selbst vorhanden ist. Modulare Common-Rail-Systeme kommen bei besonders großen Motoren zum Einsatz, bei welchen die einzelnen Injektoren unter Umständen in erheblichem Abstand voneinander angebracht sind. Die alleinige Verwendung eines gemeinsamen Rails für alle Injektoren ist bei solchen Motoren nicht sinnvoll, da es aufgrund der langen Leitungen während der Einspritzung zu einem massiven Einbruch im Einspritzdruck kommen würde, sodass bei längerer Spritzdauer die Einspritzrate merklich einbrechen würde. Bei solchen Motoren ist es daher vorgesehen, einen Hochdruckspeicher im Inneren eines jeden Injektors anzuordnen. Eine solche Bauweise wird als modularer Aufbau bezeichnet, da jeder einzelne Injektor über seinen eigenen Hochdruckspeicher verfügt und somit als eigenständiges Modul eingesetzt werden kann. Unter einem Hochdruckspeicher ist hierbei nicht eine gewöhnliche Leitung zu verstehen, sondern es handelt sich bei einem Hochdruckspeicher um ein druckfestes Gefäß mit einer Zu- bzw. Ableitung, dessen Durchmesser im Vergleich zu den Hochdruckleitungen deutlich vergrößert ist, damit aus dem Hochdruckspeicher eine gewisse Einspritzmenge abgegeben werden kann, ohne dass es zu einem sofortigen Druckabfall kommt.

Fig. 2 zeigt eine vergrößerte Darstellung des Details II der Fig. 1. Der Hochdruckspeicher 6 weist einen rohrförmigen Endabschnitt 20 auf, der mit einem Innengewinde 21 versehen ist. Der Haltekörper 5 ist mit einem Außengewinde 22 versehen, das im in den Hochdruckspeicher 6 eingeschraubten Zustand des Haltekörpers 5 mit dem Innengewinde 21 zusammenwirkt. Beim Festziehen der Schraubverbindung wird die konische Stirnfläche 23 des Haltekörpers 5 gegen die konische Auflagefläche 24 des Hochdruckspeichers 6 gespannt, wodurch eine Abdichtung zwischen Hochdruckspeicher 6 und Haltekörper 5 erzielt wird. Im verspannten Zustand wird der erste Gewindegang 25 bei herkömmlichen Ausführungen der Gewindeverbindung am höchsten belastet.

Erfindungsgemäß ist nun am freien Ende des rohrförmigen Endabschnitts 20 ein Außenring 26 mittels eines Presssitzes angebracht. Der Presssitz wird auf herkömmliche Art und Weise erhalten, z.B. durch Aufwärmen des Außenrings 26 und nachfolgendes Aufschrumpfen auf den rohrförmigen Endabschnitt 20. Der Außenring 26 bewirkt eine elastische Vorspannung des rohrförmigen Endabschnitts 20 bzw. des Innengewindes 21 in radialer Richtung, welche beim Verspannen der Gewinde zu einer Entlastung des ersten Gewindeganges 25 führt. Die Schraubenkraft wird besser verteilt, sodass die weiter von der Auflagefläche 24 entfernten Gewindegänge höher belastet werden. Der Außenring 26 ist insbesondere im Bereich der letzten Gewindegänge des Innengewindes 21 angebracht. Das freie Ende des rohrförmigen Endabschnitts 20 weist im Bereich der Auflage des Außenrings 26 eine Materialverjüngung in radialer Richtung auf, die bevorzugt der radialen Dicke des Außenringes 26 entspricht.

## Patentansprüche

1. Verfahren zur Herstellung einer Gewindeverbindung zwischen einer ersten und einer zweiten, jeweils für das Führen von Hochdruckmedium vorgesehenen Komponente einer Einspritzvorrichtung für Brennkraftmaschinen, wobei ein Innengewinde an einem rohrförmigen Endabschnitt der ersten Komponente ausgebildet ist, in welches die ein Außengewinde aufweisende zweite Komponente einschraubbar und gegen eine Auflagefläche der ersten Komponente spannbar ist, **dadurch gekennzeichnet, dass** ein Außenring (26) auf den rohrförmigen Endabschnitt (20) gepresst wird, der eine elastische, in radialer Richtung wirkende Vorspannung aufbringt, und die Komponenten (5,6) danach verschraubt werden.

2. Verfahren nach Anspruch 1, **dadurch gekennzeichnet, dass** der Außenring (26) auf das freie Ende des rohrförmigen Endabschnitts (20) gepresst wird.

3. Verfahren nach Anspruch 1 oder 2, **dadurch gekennzeichnet, dass** die Pressung zwischen dem Außenring (26) und dem rohrförmigen Endabschnitt (20) mindestens 150 N/mm2, bevorzugt 200 - 250 N/mm2 beträgt.

4. Verfahren nach Anspruch 1, 2 oder 3, **dadurch gekennzeichnet, dass** die erste Komponente ein integrierter Hochdruckspeicher (6) eines modularen Common Rail Injektors und die zweite Komponente ein Haltekörper (5) des modularen Common Rail Injektors ist.

5. Gewindeverbindung von Hochdruckmedium führenden Komponenten einer Einspritzvorrichtung für Brennkraftmaschinen, umfassend eine erste Komponente und eine zweite Komponente, wobei die erste Komponente an einem rohrförmigen Endabschnitt ein Innengewinde und die zweite Komponente ein in das Innengewinde einschraubbares Außengewinde aufweist, wobei die zweite Komponente bei Festziehen der Gewindeverbindung mit einer Stirnfläche gegen eine Auflagefläche der ersten Komponente spannbar ist, **dadurch gekennzeichnet, dass** die erste Komponente (6) einen außen mittels Presssitz am rohrförmigen Endabschnitt (20) befestigten Außenring (26) trägt.

6. Gewindeverbindung nach Anspruch 5, **dadurch gekennzeichnet, dass** der Außenring (26) am freien Ende des rohrförmigen Endabschnitts (20) befestigt ist.

7. Gewindeverbindung nach Anspruch 5 oder 6, **dadurch gekennzeichnet, dass** die Pressung zwischen dem Außenring (26) und dem rohrförmigen Endabschnitt (20) mindestens 150 N/mm2, bevorzugt 200 - 250 N/mm2 beträgt.

8. Gewindeverbindung nach Anspruch 5, 6 oder 7, **dadurch gekennzeichnet, dass** die erste Komponente ein integrierter Hochdruckspeicher (6) eines modularen Common Rail Injektors und die zweite Komponente ein Haltekörper (5) des modularen Common Rail Injektors ist.

9. Erste Komponente für eine Gewindeverbindung nach einem der Ansprüche 5 bis 8, wobei ein Innengewinde an einem rohrförmigen Endabschnitt der ersten Komponente ausgebildet ist, in welches eine ein Außengewinde aufweisende zweite Komponente einschraubbar und gegen eine Auflagefläche der ersten Komponente spannbar ist, **dadurch gekennzeichnet, dass** die erste Komponente (6) einen außen mittels Presssitz am rohrförmigen Endabschnitt (20) befestigten Außenring (26) trägt.

10. Erste Komponente nach Anspruch 9, **dadurch gekennzeichnet, dass** der Außenring (26) am freien Ende des rohrförmigen Endabschnitts (20) befestigt ist.

11. Erste Komponente nach Anspruch 9 oder 10, **dadurch gekennzeichnet, dass** die Pressung zwischen dem Außenring (26) und dem rohrförmigen Endabschnitt (20) mindestens 150 N/mm2, bevorzugt 200 - 250 N/mm2 beträgt.

## Claims

1. Method for producing a threaded connection between a first and a second component, provided in each case for conducting high-pressure medium, of an injection device for internal combustion engines, wherein an internal thread is formed on a tubular end section of the first component, into which internal thread the second component, which has an external thread, can be screwed and braced against an abutment surface of the first component, **characterized in that** an outer ring (26) is pressed onto the tubular end section (20), which outer ring imparts an elastic preload acting in a radial direction, and the components (5, 6) are thereafter screwed together.

2. Method according to Claim 1, **characterized in that** the outer ring (26) is pressed onto the free end of the tubular end section (20).

3. Method according to Claim 1 or 2, **characterized in that** the contact pressure between the outer ring (26) and the tubular end section (20) amounts to at least 150 N/mm2, preferably 200 - 250 N/mm2.

4. Method according to Claim 1, 2 or 3, **characterized in that** the first component is an integrated high-pressure accumulator (6) of a modular common-rail injector, and the second component is a holding body (5) of the modular common-rail injector.

5. Threaded connection of components, which conduct high-pressure medium, of an injection device for internal combustion engines, comprising a first component and a second component, wherein the first component has an internal thread on a tubular end section, and the second component has an external thread that can be screwed into the internal thread, wherein, when the threaded connection is tightened, the second component can be braced with a face surface against an abutment surface of the first component, **characterized in that** the first component (6) bears an outer ring (26) which is fastened at the outside, by means of an interference fit, to the tubular end section (20).

6. Threaded connection according to Claim 5, **characterized in that** the outer ring (26) is fastened to the free end of the tubular end section (20).

7. Threaded connection according to Claim 5 or 6, **characterized in that** the contact pressure between the outer ring (26) and the tubular end section (20) amounts to at least 150 N/mm2, preferably 200 - 250 N/mm2.

8. Threaded connection according to Claim 5, 6 or 7, **characterized in that** the first component is an integrated high-pressure accumulator (6) of a modular common-rail injector, and the second component is a holding body (5) of the modular common-rail injector.

9. First component for a threaded connection according to one of Claims 5 to 8, wherein an internal thread is formed on a tubular end section of the first component, into which internal thread a second component, which has an external thread, can be screwed and braced against an abutment surface of the first component, **characterized in that** the first component (6) bears an outer ring (26) which is fastened at the outside, by means of an interference fit, to the tubular end section (20).

10. First component according to Claim 9, **characterized in that** the outer ring (26) is fastened to the free end of the tubular end section (20).

11. First component according to Claim 9 or 10, **characterized in that** the contact pressure between the outer ring (26) and the tubular end section (20) amounts to at least 150 N/mm2, preferably 200 - 250 N/mm2.

## Revendications

1. Procédé de fabrication d'une liaison filetée entre un premier et un deuxième composant d'un dispositif d'injection pour moteurs à combustion interne, prévus à chaque fois pour le guidage de fluide à haute pression, un filetage interne étant réalisé au niveau d'une portion d'extrémité tubulaire du premier composant, dans laquelle le deuxième composant présentant un filetage externe peut être vissé et peut être serré contre une surface d'appui du premier composant, **caractérisé en ce qu'**une bague externe (26) est pressée sur la portion d'extrémité tubulaire (20), laquelle produit une précontrainte élastique agissant dans la direction radiale, et les composants (5, 6) sont ensuite vissés.

2. Procédé selon la revendication 1, **caractérisé en ce que** la bague externe (26) est pressée sur l'extrémité libre de la portion d'extrémité tubulaire (20).

3. Procédé selon la revendication 1 ou 2, **caractérisé en ce que** le pressage entre la bague externe (26) et la portion d'extrémité tubulaire (20) vaut au moins 150 N/mm2, de préférence de 200 à 250 N/mm2.

4. Procédé selon la revendication 1, 2 ou 3, **caractérisé en ce que** le premier composant est un accumulateur haute pression intégré (6) d'un injecteur à rampe commune modulaire et le deuxième composant est un corps de fixation (5) de l'injecteur à rampe commune modulaire.

5. Liaison filetée de composants d'un dispositif d'injection pour moteurs à combustion interne, conduisant un fluide à haute pression, comprenant un premier composant et un deuxième composant, le premier composant présentant un filetage interne au niveau d'une portion d'extrémité tubulaire et le deuxième composant présentant un filetage externe pouvant être vissé dans le filetage interne, le deuxième composant, lors du serrage de la liaison filetée, pouvant être serré avec une surface frontale contre une surface d'appui du premier composant, **caractérisée en ce que** le premier composant (6) porte une bague externe (26) fixée à l'extérieur au moyen d'un ajustement par pressage sur la portion d'extrémité tubulaire (20).

6. Liaison filetée selon la revendication 5, **caractérisée en ce que** la bague externe (26) est fixée à l'extrémité libre de la portion d'extrémité tubulaire (20).

7. Liaison filetée selon la revendication 5 ou 6, **caractérisée en ce que** le pressage entre la bague externe (26) et la portion d'extrémité tubulaire (20) vaut au moins 150 N/mm2, de préférence 200 - 250 N/mm2.

8. Liaison filetée selon la revendication 5, 6 ou 7, **caractérisée en ce que** le premier composant est un accumulateur haute pression intégré (6) d'un injecteur à rampe commune modulaire et le deuxième composant est un corps de fixation (5) de l'injecteur à rampe commune modulaire.

9. Premier composant pour une liaison filetée selon l'une quelconque des revendications 5 à 8, dans lequel un filetage interne réalisé au niveau d'une portion d'extrémité tubulaire du premier composant, dans lequel un deuxième composant présentant un filetage externe peut être vissé et serré contre une surface d'appui du premier composant, **caractérisé en ce que** le premier composant (6) porte une bague externe (26) fixée à l'extérieur au moyen d'un ajustement par pressage sur la portion d'extrémité tubulaire (20).

10. Premier composant selon la revendication 9, **caractérisé en ce que** la bague externe (26) est fixée à l'extrémité libre de la portion d'extrémité tubulaire (20).

11. Premier composant selon la revendication 9 ou 10, **caractérisé en ce que** le pressage entre la bague externe (26) et la portion d'extrémité tubulaire (20) vaut au moins 150 N/mm2, de préférence 200 - 250 N/mm2.
